# EUROPEAN PATENT SPECIFICATION

(11) **EP 3 380 413 B1**
(45) Date of publication and mention of the grant of the patent: **27.10.2021**
(21) Application number: 16812680.3
(22) Date of filing: 21.11.2016
(51) Int. Cl.: B65D 85/34, A01N 31/08, A23B 7/154

(54) **PACKAGING FOR FRUIT AND VEGETABLE PRODUCTS TREATED WITH AN ANTIMICROBIAL SOLUTION**
MIT EINER ANTIMIKROBIELLEN LÖSUNG BEHANDELTE VERPACKUNG FÜR OBST- UND GEMÜSEPRODUKTE
EMBALLAGE POUR FRUITS ET LÉGUMES TRAITÉ PAR UNE SOLUTION ANTIMICROBIENNE

(30) Priority: 25.11.2015 IT UB20155878
(43) Date of publication of application: 03.10.2018
(73) Proprietor: Consorzio Bestack, 47121 Forlì (IT); Alma Mater Studiorum - Università di Bologna, 40126 Bologna (IT)
(72) Inventor: LANCIOTTI, Rosalba, 40126 Bologna (IT); PATRIGNANI, Francesca, 40126 Bologna (IT); GARDINI, Fausto, 40126 Bologna (IT); SIROLI, Lorenzo, 40126 Bologna (IT)
(74) Representative: Antonucci, Emanuele
(86) International application number: PCT/EP2016/078287
(87) International publication number: WO 2017/089292

(56) References cited:
- WO-A1-2015/006671
- WO-A1-2015/107089
- FR-A- 1 049 655

## Description

### Technical field

The present invention relates to a packaging for fruit and vegetable products treated with an antimicrobial solution.

In particular, the present packing has been developed with reference to the sector of the logistics of easily perishable fruit and vegetable products.

Therefore, the invention is used mainly in the fruit and vegetable product food sector.

### Background art

In the identified industrial sector and in particular in the case of packaging for fruit and vegetable products, it is more and more industrially strategic to bring in optimum organoleptic conditions the fruit and vegetable products on the table of those who buy them. This condition is particularly important in the case of perishable products, even more if these products have to travel long distances, for example to be exported. Therefore, it is strategic, in order to increase even more the competitiveness of the sector, to offer quality products able to reach the consumer's table at the best stage of ripening. It is therefore a priority to try to slow down the degradative effects of perishable products such as fruit and vegetable products, reduce their deployment time and increase their so-called shelf life, *i.e.* the time within which the product can be sold in the best possible conditions. All of this without forgetting the importance of being able to offer the product at the best possible quality degree in terms of organoleptic and microbiological quality. In fact, the microorganisms present on the surface of the fruit can contribute significantly to its degradation but also to its safety, if they are pathogenic microorganisms. In fact, more and more fresh fruit and vegetable products are implicated in food poisoning.

Solutions directly acting on the product in a post-harvest phase and allowing to lengthen the shelf life are since long time available on the market, but they are available only for some products. Unfortunately, there is often the risk of completely arresting the ripening process with the consequent reduction of the quality level of the product for sale.

Therefore, there is a strong need to make available a packaging which, treated with an antimicrobial solution, slows downthe alteration process of the fruit and vegetable products put inside of it, so as to ensure a sufficient long period of time between harvesting and the final sale of the product, before the first signs of degradation appear, even in the presence of fruit and vegetable products harvested in the optimum period of ripening and therefore more easily perishable under normal conditions, so as to be consumed at the best degree of maturation and with the best microbiological quality.

WO 2015/107089 discloses a transport package for food products wherein an active coating which protects the products is sprayed on the package.

### Summary of the invention

The object of the present invention is to provide a packaging for fruit and vegetable products having characteristics such as to satisfy the above mentioned requirements and at the same time to overcome the drawbacks mentioned above with reference to the known technique.

Another object is to provide an antimicrobial solution to delay alteration phenomena linked to the development of spoilage micoorganisms (molds, yeasts, bacteria, agents for rot) of fruit and vegetable products and a method for its application to a packaging.

The above mentioned problems are solved by the transport packaging according to claim 1.

Further characteristics and advantages will become more apparent from the detailed description given hereinafter of some preferred, but not exclusive, embodiments of the present invention, with reference to the appended drawings, given by way of example but not of limitation.

### Brief description of the drawings

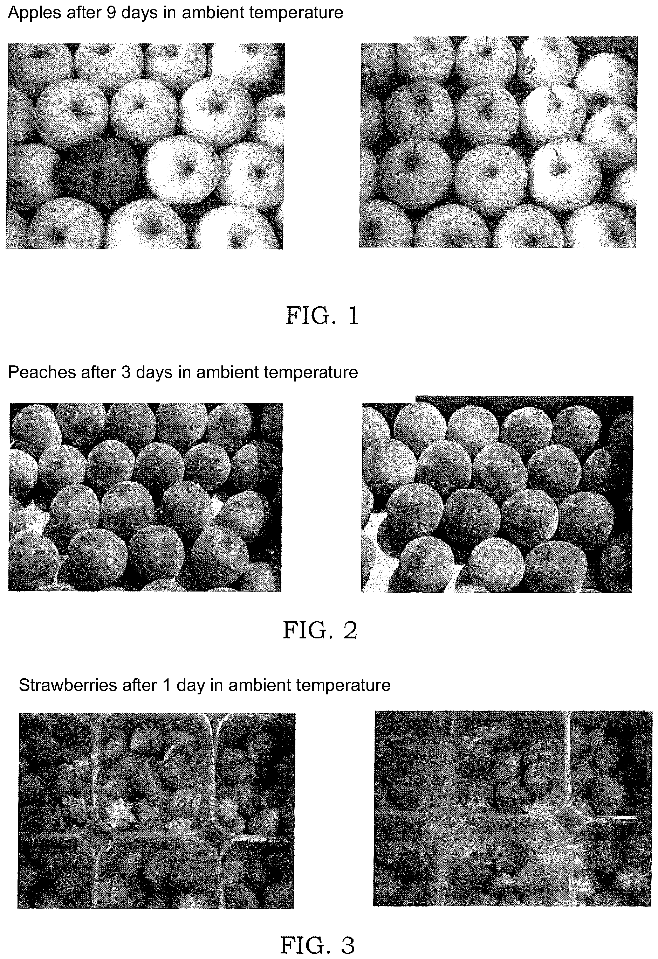

- Figure 1 shows two photos of a group of apples taken after 9 days at room temperature, in a traditional packaging (left) and in a packaging treated according to the present invention (right), respectively;
- Figure 2 shows two photos of a group of peaches taken after 3 days at room temperature, in a traditional packaging (left) and in a packaging treated according to the present invention (right), respectively;
- Figure 3 shows two photos of a group of strawberries taken after 1 day at room temperature, in a traditional packaging (left) and in a packaging treated according to the present invention (right), respectively.

### Detailed description

The transport packaging for fruit and vegetable products according to the present invention, is supplemented, by spreading on its surface, with an antimicrobial solution which lasts on the packaging itself as long as packing, supplying and purchasing by consumers occur, so to reduce alteration phenomena linked to the development of spoilage microorganisms of the fruit and vegetable products contained in the packaging. Moreover, these substances which are active against many food pathogenic microorganisms, increase the safety of the packaged products, delaying the development of possible pathogenic microorganisms present on packaged fruit. The antimicrobial substances in object, in addition to slow down the development of the microorganisms present on the packaged product, due to their gradual release over time, have also the function of reducing surface contamination of packaging themselves by wide-spread environmental microorganisms, both pathogens and spoilage agents, with consequent reduction of cross-contamination of the packaged product.

The active substances contained in the antimicrobial solution and which will be discussed in more detail below, slowly release in the packaging natural molecules that slow down the alteration process of the product contained therein, by inhibiting the decay processes, the colour degradation and the microbial proliferation.

This allows for the harvesting of the fruit and vegetable products at a more advanced ripening degree than usual with consequent higher sugar degrees, lower acidity and best profiles in molecules having sensory impact that allow to obtain a product with high organoleptic quality on the table of the consumer. However, the riper products are notoriously more perishable because they facilitate the microbial development, with consequent reduction of the commercial life of the product but also with increased risk of development of food-borne microbial agents.

The differences in the appended figures can be visually appreciated, among packaged product with traditional packaging (left) and the same product, in the same conditions, placed in the packaging according to the present invention (right).

The antimicrobial solution is in liquid form and it is composed of water with specific active substances, reported below, diluted in ethanol or conveyed in propylene glycol and Tween 20 or homogenized, due to their lack of solubility in water. In the case of ethanol use, the ethanol solution with antimicrobial active substances is added to drinking water in quantities of 1 to 5%.

According to the present invention the mixture is formed by: Citral, Hexanal and 2-(E)-Hexenal.

Other substances employable in antimicrobial solutions which are not part of the present invention are: Neral, Geranial, Linalool, α-Pinene, β-Pinene, Limonene, Terpineol, Cinnamaldehyde, Gamma-Butyrolactone, Thymol, Carvacrol, Carvone, Myrcene, p-Cymene, gamma-Terpinene.

In order to obtain a synergistic effect and therefore multiplicative of the effects beside that in consequence of the different volatility and the optimal temperatures of use, it is preferable that different active substances are employed. In the context of the usable substances three aldehydes have been chosen because notoriously they have a broad spectrum of antimicrobial action (they are active against many spoilage and pathogenic microorganisms) and because organoleptically compatible with the packaged fruit and vegetable products. In fact, they are substances that are part of the essential oils or of the aroma constituents of many plant products. For example, hexanal and Trans-2 hexenal are essential components of apple, grape and many other vegetable aroma. Citral especially characterizes the aroma of citrus fruits.

The amount of used antimicrobial solution may vary depending on the needs, sizes, shapes,quantities and the type of product packaged inside the packaging, as well as the range of antimicrobial solution to be distributed is defined comprised between 7 and 50 ml per m² of surface packaging equivalent developed into a plane. The definition of such a quantity will involve different concentrations of the antimicrobial solution.

In particular, the total concentration of the active substances of the antimicrobial solution is comprised between 420 and 107,000 mg/L, depending on the volume distributed on a packaging and of the desired concentration per m² of packaging.

Expressing the data with reference to the packaging dimension we have the following: the total amount of active substances is usually comprised between 21 and 750 mg/m², where m² is the surface of the packaging developed into a plane.

Each of the active substances taken individually is distributed in a quantity comprised between 7 and 250 mg/m², more preferably between 30 and 140 mg/m², where m² is always the surface of the packaging developed into a plane.

Therefore, the total concentration of the active substances forming the antimicrobial solution will be dependent on the desired concentration on the packaging (21-750 mg/m²) and the distributed volume of antimicrobial solution (7-50 ml/m²).

The composition in terms of active substances and the concentration of each of them in the antimicrobial solution may vary depending on the type of the considered fruit or vegetable product and the ripening degree thereof.

By way of example, for the packaging of apples, pears, strawberries and peaches, the antimicrobial solution is made with the active substance: Citral, Hexanal and 2-(E)-Hexenal, each active ingredient preferably having a concentration comprised between 30 and 140 mg/m².

As an example, in the table below some of the most common packaging formats in the fruit and vegetable sector and the development into a plane thereof are listed in m².

| Format | Size in cm | | | | Development into a plane in m² |
|---|---|---|---|---|---|
| | Base lenght | Base width | Head height | Sideboard height | |
| 60x40x10 | 60 | 40 | 10.6 | 7 | 0.485 |
| 40x30x20 | 40 | 30 | 19.7 | 16 | 0.546 |
| 50x30x16.7 | 50 | 30 | 16.7 | 12 | 0.499 |

Further, in the following table the exemplifying intervals of the amounts of each active substance and the resulting antimicrobial solution concentrations thereof for the various packaging formats considered are indicated. The analytical data are shown in the table below:

| **Substance** | **Optimal amounts for packaging format** | | **Optimal amounts for packaging format** | | **Optimal amounts for packaging format** | |
|---|---|---|---|---|---|---|
| | **60x40x10 cm (mg)** | | **40x30x20 cm (mg)** | | **50x30x16.7cm (mg)** | |
| | **Min.** | **Max.** | **Min.** | **Max.** | **Min.** | **Max.** |
| -Citral | 14.6 | 67.9 | 16.4 | 76.4 | 15.0 | 69.9 |
| -Hexanal | 14.6 | 67.9 | 16.4 | 76.4 | 15.0 | 69.9 |
| -2-(E)-Hexenal | 14.6 | 67.9 | 16.4 | 76.4 | 15.0 | 69.9 |
| **Total concentration mg** | **43.7** | **203.7** | **49.1** | **229.3** | **44.9** | **209.6** |

Effectively, the antimicrobial solution is deployed on the inside of the packaging just before the fruit and vegetable product to be contained is inserted in the latter. The activation times are strictly dependent on the concentration of the active substances and on the distribution dynamics of the active packaging and must be optimized case by case.

Also, the ways in which they are distributed can be of various types; by way of example they can occur by a roller, spray or brush, preferably spray on porous surfaces, such as those of the corrugated cardboard, wood or plastic. The application is done to the still empty packaging, in the case of wood, preferably after the latter has been assembled. The application can take place at different points of the distribution chain of the corrugated cardboard packaging: from the immediate production of the flat die-cutter to the box assembled immediately before product packaging.

By way of example in the case of cardboard packaging, the latter arrive in the form of die-board cut by the packaging manufacturer to the manufacturer/packager of fruit and vegetable products. The latter loads the corrugated cardboard die-cut in a traditional editor machine, which through a jig, a plate which descends on the die-cut and the glue points provided by the system, mounts the case that forms the packaging. The latter comes out of the jig and passes through a conveyor in a tunnel in which the antimicrobial solution is sprayed, by spray-misting the same. Subsequently, the thus treated case is sent at the packaging line product. These antimicrobial solutions and distribution techniques thereof can also be applied for the surface sanitization of plastic packaging with folding sideboard.

Based on the distribution data of the antimicrobial solution on the packaging, the volume of mixture to be distributed per m² equivalent to the development into a plane of the packaging, for single format, is reported in the following table.

Table showing the minimum and maximum volumes of antimicrobial solution in ml:

| | **Volume of the mixture in ml** | |
|---|---|---|
| | **Min.** | **Max** |
| For 1 m² of equivalent packaging surface | 7 | 50 |
| 60x40x10 | 3.4 | 24.3 |
| 40x30x20 | 3.8 | 27.3 |
| 50x30x16.7 | 3.5 | 25.0 |

Based on these data, the number, minimum and maximum, of packaging which can be treated with one liter of antimicrobial solution is reported:
Minimum and maximum number of packaging treatable with 11 of antimicrobial solution

| **Format** | **Minimum number** | **Maximum number** |
|---|---|---|
| 60x40x10 | 41 | 295 |
| 40x30x20 | 37 | 262 |
| 50x30x16.7 | 40 | 286 |

As can be appreciated from what described, the transport packaging for fruit and vegetable products according to the present invention allows to meet the needs and to overcome the drawbacks described in the introductive part of the present description with reference to the background art.

In particular, the thus treated packaging allows to slow down the alteration process of the vegetables contained therein, so as to consequently increase the shelf life of the products themselves, so as to be able to distribute products, compared to the packaging without treatment, harvested with the right degree of physiological ripening.

Obviously, to the above described packaging, a person skilled in the art, in order to satisfy contingent and specific requirements, may make numerous modifications and variants, all anyway contained within the scope of the invention, as defined by the following claims.

## Claims

1. Transport packaging for fruit and vegetable products wherein the packaging is supplemented, by spreading on its surface, with an antimicrobial solution which lasts on the packaging as long as packing, supplying and purchasing by consumers occur, so to reduce the microbial load thereof and the role in the cross-contamination of the packaged products as well as delay spoilage and alteration phenomena of the fruit and vegetable products contained in the packaging, **characterized in that** said antimicrobial solution consists of the following three active substances: Citral, Hexanal and 2-(E)-Hexenal.

2. Packaging according to claim 1, wherein the packaging is made of corrugated cardboard.

## Patentansprüche

1. Transportverpackung für Obst- und Gemüseprodukte, wobei die Verpackung mit einer antimikrobiellen Lösung, die auf der Verpackung verbleibt solange Verpacken, Lieferung und Erwerb durch Konsumenten stattfinden, durch Verteilen auf ihrer Oberfläche beaufschlagt wird, um ihre mikrobielle Belastung und die Rolle bei der gegenseitigen Kontamination der verpackten Produkte zu verringern sowie den Verderb und Veränderungsphänomene der Obst- und Gemüseprodukte, die in der Verpackung enthalten sind, zu verzögern, **dadurch gekennzeichnet, dass** die antimikrobielle Lösung aus den folgenden drei Wirkstoffen besteht: Citral, Hexanal und 2-(E)-Hexenal.

2. Verpackung nach Anspruch 1, wobei die Verpackung aus Wellpappe hergestellt ist.

## Revendications

1. Emballage de transport pour des produits fruitiers et végétaux dans lequel l'emballage est complété, par étalement sur sa surface, par une solution antimicrobienne qui perdure sur l'emballage tout au long de l'emballage, de la distribution et de l'achat par des consommateurs, de manière à réduire la charge microbienne de celui-ci et le rôle dans la contamination croisée des produits emballés ainsi qu'à retarder des phénomènes de dégradation et d'altération des produits fruitiers et végétaux contenus dans l'emballage, **caractérisé en ce que** ladite solution antimicrobienne est constituée des trois substances actives suivantes : Citral, Hexanal et 2-(E)-Hexenal.

2. Emballage selon la revendication 1, dans lequel l'emballage est constitué de carton ondulé.
